Europäisches Patentamt

(19) European Patent Office

Office européen des brevets

(11) Numéro de publication: **0 158 620**
A1

## (12) DEMANDE DE BREVET EUROPEEN

(21) Numéro de dépôt: 85870032.1

(22) Date de dépôt: 28.02.85

(51) Int. Cl.⁴: **B 01 D 33/24**
B 01 D 35/08, B 01 D 33/40

(30) Priorité: 14.03.84 LU 85251

(43) Date de publication de la demande:
16.10.85 Bulletin 85/42

(84) Etats contractants désignés:
IT

(71) Demandeur: Prayon Développement Société anonyme
rue Joseph Wauters, 144
B-4130 Engis(BE)

(72) Inventeur: Davister, Armand Laurent
Quai de la Boverie 98/091
B-4200 Liège(GB)

(72) Inventeur: Martin, Georges-François
Chaussée de Ramioul 325
B-4120 Flémalle(BE)

(74) Mandataire: van Malderen, Michel
p.a. FREYLINGER & ASSOCIES 85/042 Boulevard de la
Sauvenière
B-4000 Liège(BE)

(54) Perfectionnement apporté aux filtres rotatifs sous vide à plan de filtration horizontal.

(57) Filtre rotatif sous vide à plan de filtration horizontal comportant un distributeur constitué par une partie distributrice, une partie collectrice et une chambre de séparation des gaz. La partie collectrice (110,) consiste en une seule cuve divisée en trois compartiments (139, 140, 141), respectivement, pour les eaux-mères, le liquide de premier lavage et le liquide de deuxième lavage. Les compartiments peuvent être reliés entre eux de manière à permettre une circulation de fluide dans un sens imposé. La partie collectrice comporte également un secteur pour les opérations annexes et la présuccion.

EP 0 158 620 A1

./...

FIG. 5.

PERFECTIONNEMENT APPORTE AUX FILTRES ROTATIFS SOUS VIDE
A PLAN DE FILTRATION HORIZONTAL.

La présente invention est relative à un perfectionnement apporté aux filtres rotatifs sous vide à plan de filtration horizontal. Ledit perfectionnement concerne plus particulièrement le distributeur à axe vertical dont sont équipés ces filtres et dont les fonctions sont de récolter, répartir et stocker les fluides provenant des éléments filtrants mobiles du filtre vers le ou les dispositifs fixes d'évacuation de ces fluides.

Les filtres à plan de filtration horizontal concernés par l'invention et actuellement connus, peuvent comporter soit une surface annulaire dite "table filtrante", divisée en éléments filtrants juxtaposés et immobilisés entre eux, donc recevant un gâteau de filtration continu, soit une surface filtrante constituée de cellules filtrantes juxtaposées mais basculables individuellement.

Bien que la présente description de l'invention s'appuie sur l'exemple d'application d'un filtre du type à cellules basculables, elle n'est pas limitée à ce type de filtre mais s'applique également aux autres types de filtre connus en soi.

Comme déjà décrit dans les documents de brevet FR-A-999.442, US-A-2.684.158, US-A-3.072.136, FR-A-2.326.962, US-A-4.172.791 et US-A-4.330.404, un filtre de ce type se compose d'une série d'éléments filtrants disposés de manière annulaire autour d'un distributeur, lesdits éléments filtrants étant entraînés en rotation autour dudit distributeur en vue de traverser un cycle opératoire complet, ainsi que d'un distributeur récoltant et répartissant les fluides provenant des éléments filtrants qui y sont reliés. Les distributeurs de ces filtres connus comprennent essentiellement une partie distributrice et une partie collectrice glissant l'une par rapport à l'autre, la partie collectrice étant divisée en chambres et compartiments isolés délimités par des cloisons et en communication avec un ou plusieurs dispositifs d'aspiration et d'évacuation des gaz et liquides, lesdites chambres communiquant chacune avec un dispositif d'aspiration ou de pression. La partie distributrice comporte, en correspondance avec chacun des éléments filtrants, des alvéoles débouchant successivement, au cours du mouvement cyclique, en regard de chacun des compartiments et chambres de manière que chaque élément soit mis successivement en communication avec chacun desdits compartiments et chambres.

Ces filtres équipés des distributeurs connus présentent cependant de nombreux inconvénients.

D'une part, l'encombrement des dispositifs de type connu est assez important, étant donné qu'on est en présence de compartiments en forme de récipients individuels combinés avec des conduits de soutirage et autres.

D'autre part, la séparation des gaz et des liquides est souvent peu satisfaisante,étant donné que cette séparation doit généralement s'effectuer dans de petits volumes avec des changements de direction inférieurs à 180°. Par ailleurs, le réglage précis de la présuccion est très difficile, voire impossible. On entend par présuccion une première filtration où l'on recueille le premier filtrat trouble lors de la constitution du gâteau de filtration.

On a également proposé,dans le document de brevet FR-A 999.442, de disposer la chambre de séparation des gaz extérieurement au distributeur proprement dit. Cette solution ne résoud cependant pas tous les problèmes de manière satisfaisante et l'encombrement reste toujours important.

Le but de la présente invention vise, par conséquent, un filtre continu rotatif sous vide à plan de filtration horizontal,dont le distributeur présente une construction plus compacte permettant un gain de place, ou, pour un encombrement similaire à celui des filtres connus, un fonctionnement avec des volumes de compartiments tampons des filtrats nettement supérieurs. Par ailleurs, on cherche également à améliorer la séparation des gaz et des liquides ainsi qu'à fournir une possibilité de réglage plus aisé de la présuccion et l'adjonction de fonctions annexes.

Par conséquent, la présente invention porte sur un filtre rotatif sous vide à plan de filtration sensiblement horizontal,qui comporte un distributeur constitué par une partie collectrice fixe consistant en une cuve unique généralement cylindrique ; par une partie distributrice mobile comportant des alvéoles en liaison avec les différents éléments filtrants, ladite partie collectrice étant disposée en-dessous de ladite partie distributrice et étant adaptée à celle-ci de manière à ce que la partie distributrice puisse tourner autour de son axe et glisser sur la partie collectrice ; ainsi que par une chambre séparatrice munie d'au moins un conduit d'évacuation des gaz séparés des filtrats qui prolonge la partie centrale de la partie collectrice, un espace annulaire délimité par une paroi extérieure et par une paroi intérieure étant disposé à la partie supérieure de ladite partie collectrice de manière à y amener substantiellement verticalement les filtrats venant par l'embouchure des alvéoles reliées aux éléments filtrants, tout en maintenant une distance suffisante par rapport au niveau supérieur du liquide de filtration du compartiment correspondant pour permettre la séparation des gaz, lors de la chute verticale du liquide dans la partie collectrice.

Selon une forme d'exécution particulièrement préférée de la présente invention, la partie collectrice est divisée en au moins deux compartiments par des parois de séparation radiales verticales, de préférence réglables angulairement et s'étendant du fond de ladite partie collectrice jusque dans la chambre de séparation des gaz.

Avantageusement, la chambre de séparation des gaz prolonge la partie centrale de la cuve cylindrique de la partie collectrice, et la séparation gaz/liquides se fait dans la partie supérieure de la partie collectrice pour être parfaite dans la chambre de séparation tronconique surmontant la partie collectrice.

De cette manière, on combine les divers comparments, les divers secteurs de séparation ainsi que les bacs de stockage de filtrat en un distributeur nettement plus compact. En outre, on a à sa disposition des volumes plus importants et la séparation des gaz et des liquides de filtration est sensiblement améliorée dans la chambre de séparation ainsi constituée.

Selon une forme d'exécution préférée, la partie collectrice comporte au moins trois compartiments séparés par des parois radiales verticales.Cette disposition permet de prévoir au moins un premier compartiment pour l'eau-mère, un deuxième compartiment pour le liquide du premier lavage et un troisième compartiment pour le liquide du deuxième lavage.

Avantageusement, la chambre de séparation peut encore comporter des garnitures faisant "chicane" en vue d'encore améliorer la séparation des liquides de la phase gazeuse.

Selon une forme d'exécution particulièrement préférée, la paroi séparant le compartiment contenant les eaux-mères de celui qui contient le liquide de premier lavage ainsi que la paroi séparant le compartiment contenant le liquide de premier lavage et celui qui contient le liquide de deuxième lavage, présentent chacune une ouverture de passage d'un compartiment à l'autre, disposée à un niveau qui permet le passage du filtrat dans un sens imposé, d'un compartiment à l'autre. Ainsi, le second lavage plus dilué peut déborder dans le premier lavage et celui-ci dans les eaux-mères.

D'autres avantages et détails de la présente invention apparaîtront plus clairement dans la description d'une forme d'exécution préférée de la présente invention, à l'appui des figures annexées dans lesquelles:
- les figures 1, 2 et 3 sont des vues schématiques, en perspective, en plan et en élévation d'un filtre rotatif à cellules basculantes de l'état de la technique ;

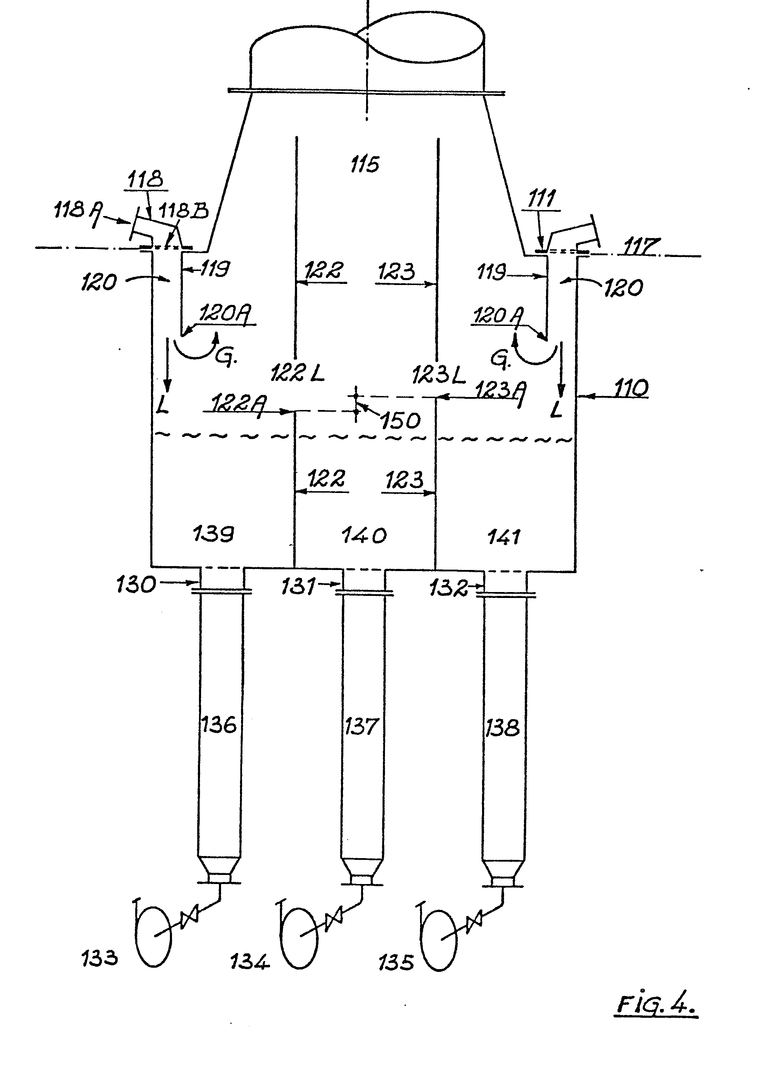

- la figure 4 est une vue schématique d'un distributeur selon la présente invention ;

- la figure 5 est une vue schématique en perspective des parties collectrice et séparatrice d'un distributeur selon la présente invention, les surfaces de friction et la coiffe tronconique n'étant pas représentées pour des raisons de clarté ;

- la figure 6 est une vue schématique partielle, en perspective de la partie collectrice du distributeur, montrant un détail permettant la mise en oeuvre d'opérations annexes;

- la figure 7 est une vue schématique en perspective montrant l'adaptation de la présuccion ; et

- la figure 8 est une vue latérale du clapet de présuccion.

Dans les différentes figures, les mêmes chiffres de référence désignent des éléments analogues ou identiques.

Bien que le présent mémoire descriptif s'appuie plus particulièrement sur l'exemple des filtres continus rotatifs à cellules, de préférence basculables, l'invention ne doit pas être considérée comme limitée à ces filtres continus rotatifs, mais elle s'applique en général aux distributeurs de filtres rotatifs sous vide à plan de filtration sensiblement horizontal d'autres types.

Les filtres comprennent en général une série d' unités de filtration appelées communément "cellules" qui subissent séparément, d'une façon discontinue, les opérations successives de filtration, lavages, traitements spéciaux divers, déchargement du gâteau formé sur la surface filtrante, lavage et séchage des cellules et de la toile filtrante. L'ensemble de ces diverses opérations se reproduit au cours de chacun des cycles du mouvement, l'ensemble des cycles constituant un processus global continu, intégré en une chaîne de filtration.

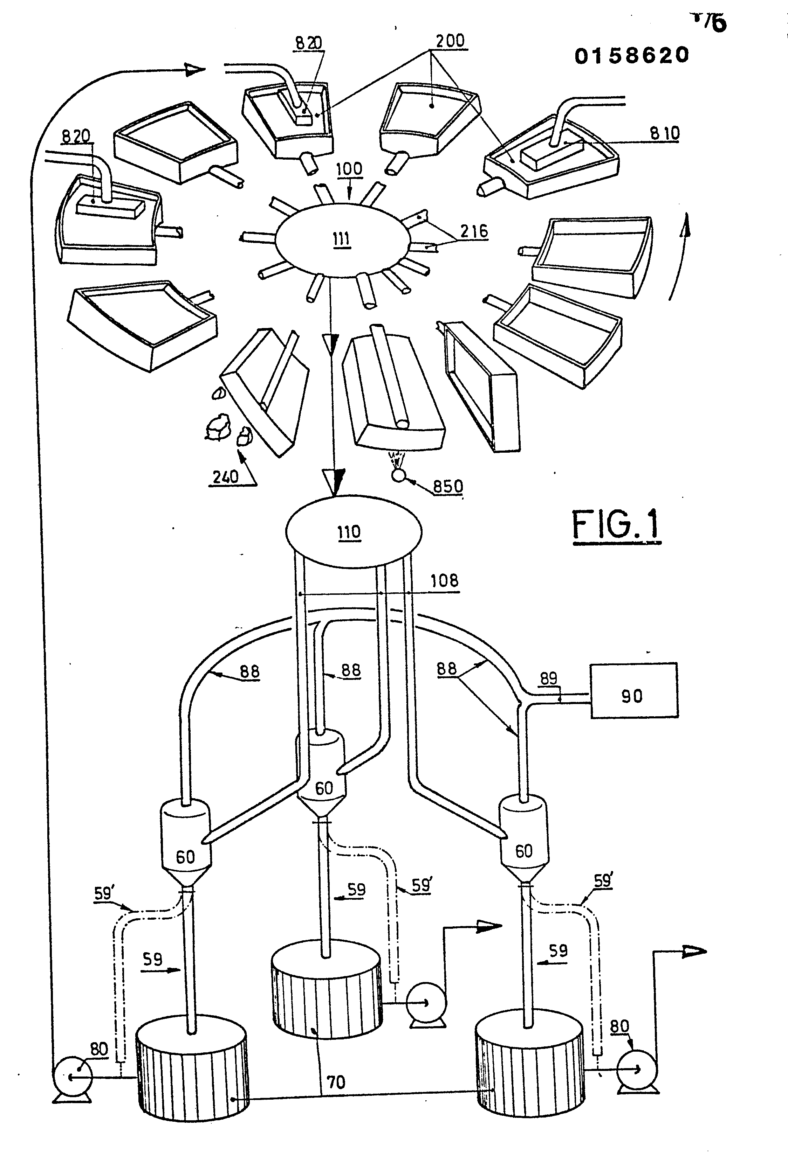

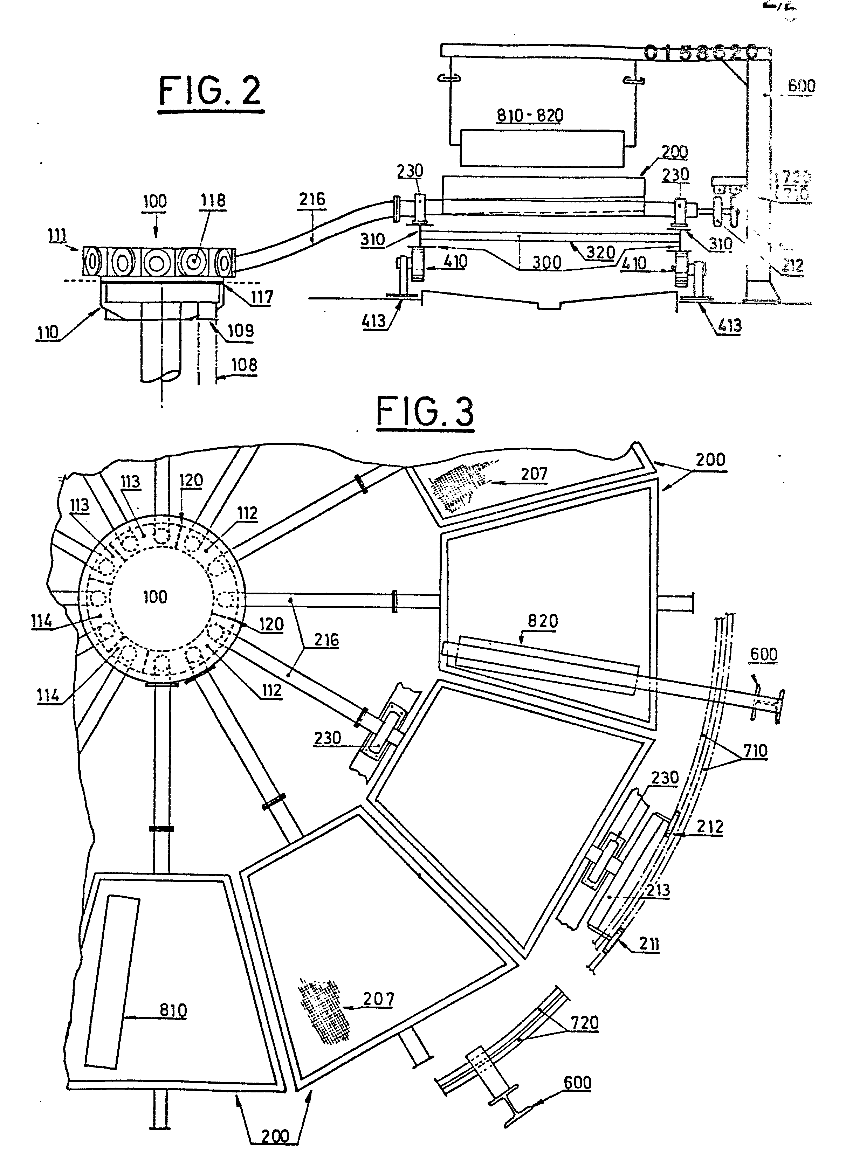

Un exemple d'une telle chaîne de filtration est schématisé à la figure 1, alors que d'autres détails d'un filtre correspondant ont été schématisés aux figures 2 et 3.

Un tel filtre comporte essentiellement :

a) un châssis tournant 300 composé de membrures circulaires 310 solidarisées par des bras de liaison radiaux 320 portant des cellules 200, par l'intermédiaire de paliers 230, ces membrures tournant sur deux séries de galets 410 fixés aux fondations et disposés en deux cercles concentriques, le mouvement restant centré par l'action de galets de centrage non représentés ;

b) un groupe moteur non représenté qui transmet le mouvement au châssis tournant par une crémaillère dentée, fixée à l'une des membrures circulaires 310 ;

c) des leviers de guidage des cellules 213 portant deux galets 211, 212 qui roulent sur des rails 710-720 attachés à une ossature périphérique 600 ;

d) des auges de répartition 810 et 820, suspendues à l' ossature 600 au-dessus des cellules et qui répartissent dans ces dernières la bouillie à filtrer et les liqueurs de lavage ;

e) un distributeur central 100, constitué essentiellement d'une part, par une tête distributrice circulaire rotative 111, qui comporte des alvéoles 118 disposés en cercle, reliés respectivement aux cellules 200 par des tuyaux souples 216 et qui tourne de concert avec le châssis 300 et les cellules 200, et, d'autre part, par une base collectrice circulaire fixe 100 qui comporte des chambres et des compartiments délimités par des cloisons, la tête rotative 111 glissant en rotation sur la base fixe 110 par l'intermédiaire d'un joint de friction plan étanche 117.

Les auges de répartition 810-820, situées en correspondance avec les cloisons, délimitent des secteurs successifs de filtration et de lavage, les liquides et gaz ayant traversé les lits filtrants des cellules de chacun de ces secteurs étant récoltés dans des compartiments, puis évacués par des tuyauteries correspondantes 108, vers des séparateurs 60, d'où les liquides sont déchargés par des tuyaux barométriques 59, dans des bacs de récolte 70, ou, comme montré en pointillé à la figure 1, par des tuyaux 59, vers des pompes d'aspiration 80, les gaz étant aspirés, de ces séparateurs, vers le haut, vers un circuit de vide 90 à travers un collecteur 88-89.

Les perfectionnements prévus par la présente invention regroupent les différents équipements référencés en 110, 108, 88, 60, 59 et 70 de façon à former un ensemble unique très compact de distribution, de séparation de différents fluides et de stockage de ceux-ci.

Comme dans le cas des distributeurs classiques, le dispositif de la présente invention comporte une tête distributrice mobile 111 avec autant d'alvéoles 118 qu'il y a d'éléments filtrants, ces alvéoles recevant,par leurs extrémités 118 A, reliées chacune à un élément par un tuyau souple 216 (figures 1 à 3), les fluides soutirés de ceux-ci et les déchargeant successivement par leurs extrémités 118 B dans les différents compartiments inférieurs à travers le joint de friction 117.

Les gaz et les liquides soutirés du filtre guidés par la paroi cylindrique 119 descendent verticalement dans la chambre annulaire 120. A la partie inférieure de la chambre 120,au point 120 A,les liquides (L) continuent leur trajet verticalement vers le bas, tandis que les gaz (G) subissent un changement de direction de 180° et sont aspirés vers le haut dans la chambre séparatrice 115.

La chambre séparatrice 115 peut avantageusement comporter des garnitures ou des parois jouant le rôle de "chicanes" en vue d'encore améliorer la séparation des liquides de la phase gazeuse.

Le plan supérieur 117 de l'espace annulaire 120 de distribution et séparation coïncide avec le joint de friction 117.

Les parois radiales 122 et 123 respectivement entre la filtration des eaux-mères et du premier lavage et entre le premier lavage et le second lavage (le nombre de parois peut être différent de 2 suivant le nombre de lavages) se prolongent dans la chambre de séparation 115.

Avantageusement, les parois radiales 122 et 123 sont réglables angulairement, la paroi 124 étant fixe, de sorte que la coupure entre les filtrats de différentes densités soit nette et correcte. Le blocage et la commande peuvent se faire par tout moyen connu en soi,du moment que l'étanchéité entre les compartiments soit assurée.

Selon une variante, les parois 122 et 123 comportent une ouverture ménagée (122 L et 123 L) au-dessus de la partie inférieure des parois contenant normalement les filtrats de façon à permettre les passages des filtrats d'un compartiment à l'autre mais dans un sens imposé, ainsi le second lavage plus dilué pourrait déborder dans le premier lavage et celui-ci dans les eaux-mères, ce qui est réalisé en ayant l'arête 123 A à un niveau supérieur à l'arête 122 A d'une distance 150.

La paroi 124 qui sépare le dernier filtrat (ici second lavage) des eaux-mères s'étend au moins sur toute la hauteur de la cuve et empêche toute communication entre le filtrat le plus dilué et les eaux-mères.

Les secteurs cylindriques recevant et contenant les filtrats (139, 140, 141) sont munis à leur partie inférieure de tubulures 130, 131, 132 d'alimentation des pompes à filtrats 133, 134, 135 via les tuyauteries 136, 137, 138.

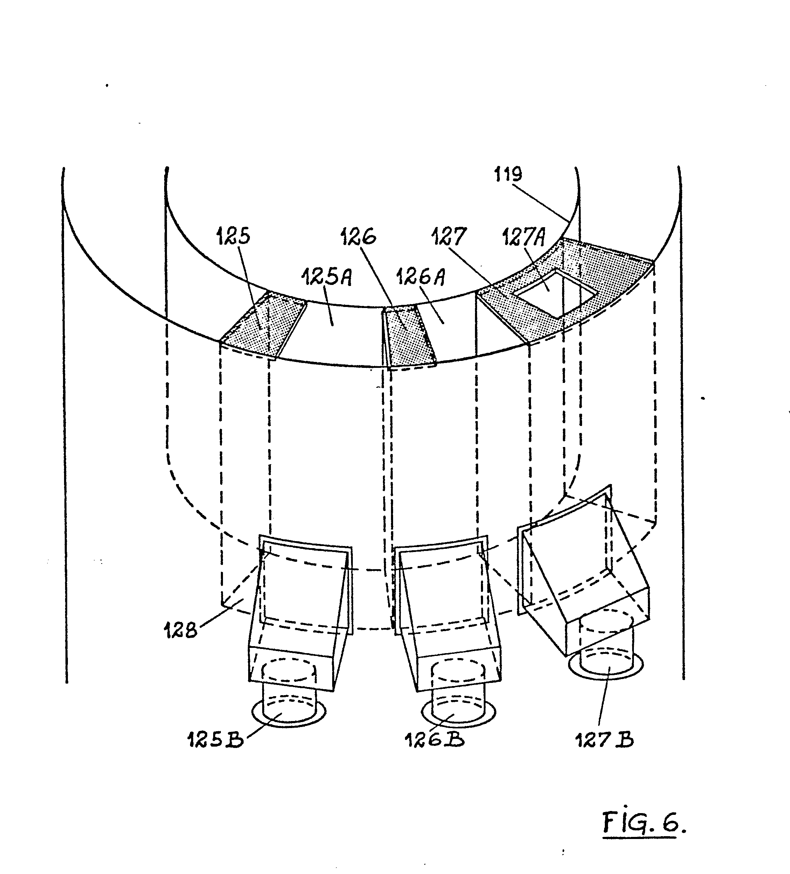

On a également fait figurer (figure 6) les cloisons de fin 125 et de début 127 de filtration sous vide entre lesquelles se situe un secteur annulaire 129 au moyen duquel peuvent s'effectuer les opérations annexes de soufflage du gâteau, séchage de la toile et drainage de l'eau résiduelle, par exemple.

Ce secteur annulaire 129 est isolé de la cuve par une paroi horizontale 128 de telle façon que les fluides y transitant doivent être soutirés ou introduits latéralement (125B, 126B, 127B), de sorte que, à l'exception de cet espace annulaire, tout le volume de la cuve est disponible pour les filtrats sous vide. Ledit secteur annulaire est à cheval sur la paroi verticale 124 séparant les eaux-mères du dernier filtrat de lavage. Ledit secteur 129 comporte, bien entendu autant de chambres qu' il y a d'opérations annexes à effectuer.

La figure 6 montre le secteur dévolu aux opérations annexes et isolé des secteurs de filtration sous vide par les cloisons 125 et 127.

Les opérations annexes peuvent être successivement :

- le soufflage d'air à travers l'ouverture 125A en vue de faciliter le déchargement du gâteau de filtration et le lavage des tissus filtrants ;
- l'aspiration d'air à travers l'ouverture 126A en vue de sécher les tissus filtrants.

En outre, dans la cloison 127 correspondant à l'opération d'alimentation de bouillie dans les cellules est aménagée une ouverture 127A permettant un complément de drainage de l'eau résiduelle s'écoulant des cellules.

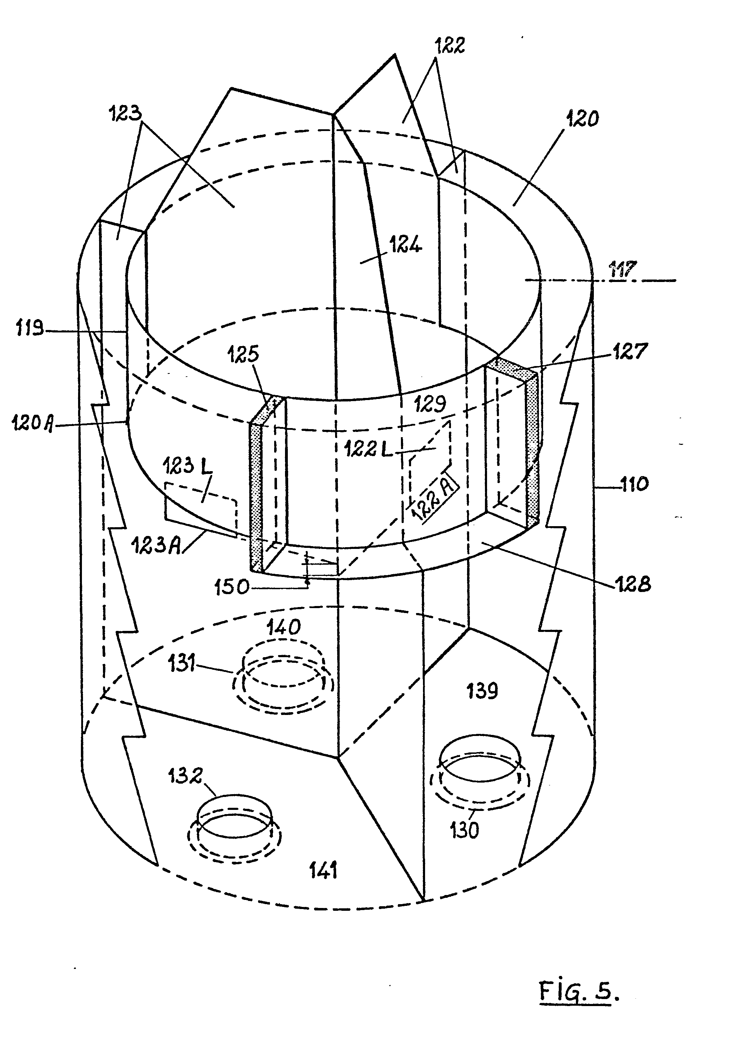

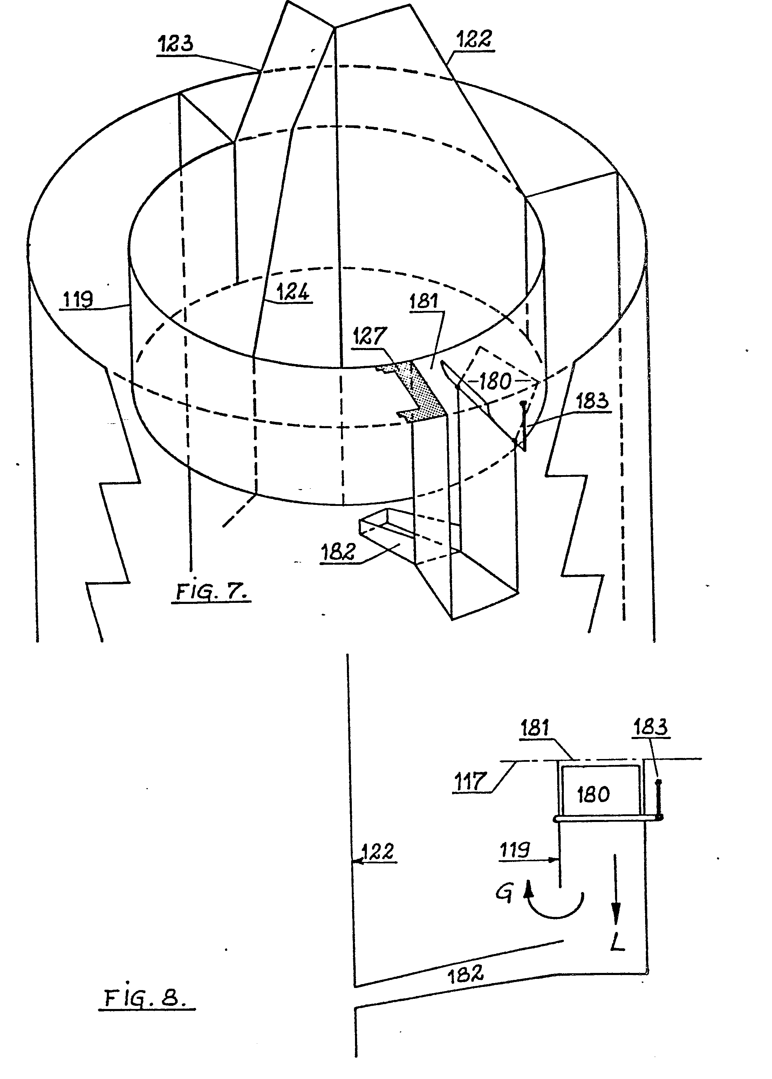

Un autre dispositif peut être également prévu dans la partie cylindrique du distributeur, il s'agit d'une section de première filtration appelée présuccion où l'on recueille le premier filtrat trouble lors de la constitution du gâteau de filtration. Cette première section de présuccion est installée dans le compartiment des eaux-mères suivant les figures 7 et 8. Le premier liquide recueilli passe à travers l'ouverture réglable 181 et rejoint, après avoir été séparé du gaz qui l'accompagne, par le conduit 182, le compartiment de premier lavage situé entre les parois 122 et 123 (figure 5).

Le réglage de l'ouverture 181 peut se faire par basculement du clapet 180 au moyen d'un levier 183, par exemple, manoeuvré depuis l'extérieur de la partie collectrice.

On constate, à la lecture du présent mémoire descriptif que le filtre sous vide rotatif à plan de filtration horizontal, équipé d'un distributeur selon l'invention présente un avantage important par rapport aux dispositifs existants, qui consiste en ce que la séparation des gaz et des liquides de filtration est sensiblement améliorée grâce à un changement de direction de l'ordre de 180° et grâce à un volume disponible plus grand qui est tel que le niveau de liquide dans les compartiments est assez bas. Les sections de passage des gaz et des liquides sont fortement agrandies et les vitesses de circulation sont fortement diminuées, améliorant ainsi les séparations entre les gaz et les liquides.

Par ailleurs, le volume des compartiments est suffisant pour pouvoir y connecter directement des pompes d'extraction sans devoir passer par des bacs auxiliaires. De ce fait, on peut travailler sans descentes barométriques d'une hauteur en relation avec le vide appliqué et installer le filtre à un niveau inférieur, pour autant que l'on utilise des pompes aspirantes.

Il faut également noter que l'ensemble compact de la partie collectrice permet d'éviter le refroidissement et les cristallisations ainsi que les incrustations qui en sont la conséquence ; ce qui rend l'entretien plus aisé et moins fréquent, et par conséquent moins onéreux.

Dans le cas de filtrats dégageant des vapeurs gênantes ou nocives, la suppression des bacs de stockage 70 des filtrats fait que l'on n'a plus besoin de dispositif de ventilation pour cette partie de l'installation.

Bien que le présent mémoire descriptif donne une forme d'exécution particulièrement préférée de l'invention, celle-ci n'est certes pas limitée à cette forme et englobe également tous les moyens équivalents permettant d'atteindre le même but ainsi que toutes les formes d'exécution couvertes par les revendications.

REVENDICATIONS

1. Filtre rotatif sous vide à plan de filtration sensiblement horizontal comprenant des éléments filtrants (200) et un distributeur (100) récoltant et répartissant les fluides provenant des éléments (200), ce distributeur (100) comprenant essentiellement une partie distributrice (111) et une partie collectrice (110) glissant l'un par rapport à l'autre en un mouvement cyclique, la partie collectrice (110) comportant au moins un compartiment (139, 140, 141) et communiquant avec un ou des dispositifs d'aspiration et d'évacuation des gaz et liquides, la partie distributrice (111) comportant, en correspondance avec chacun des éléments (200), des alvéoles (118) débouchant successivement, au cours du mouvement cyclique, en regard de chacun des compartiments éventuels, de manière que, au cours de chaque cycle, chaque élément filtrant soit mis successivement en communication avec chaque compartiment, ledit filtre étant caractérisé en ce que le distributeur est constitué par une partie collectrice (110) fixe consistant en une cuve unique généralement cylindrique ; par une partie distributrice mobile (111) comportant des alvéoles en liaison avec les différents éléments filtrants, ladite partie collectrice étant disposée en-dessous de ladite partie distributrice et étant adaptée à celle-ci ; ainsi que par une chambre séparatrice munie d'au moins un conduit d'évacuation des gaz séparés des filtrats, qui prolonge la partie centrale de la partie collectrice, un espace annulaire délimité par une paroi extérieure et par une paroi intérieure étant disposé à la partie supérieure de ladite partie collectrice de manière à y amener substantiellement verticalement les filtrats venant par l'embouchure des alvéoles (118 B) reliées aux éléments filtrants (200), tout en maintenant une distance suffisante par rapport au niveau supérieur du liquide de filtration du compartiment correspondant pour permettre la séparation des gaz, lors de la chute verticale du liquide dans la partie collectrice (110).

2. Filtre suivant la revendication 1 caractérisé en ce que la partie collectrice (110) est divisée en au moins deux compartiments par des parois radiales verticales s'étendant du fond de ladite partie collectrice (110) jusque dans la chambre de séparation des gaz.

3. Filtre suivant l'une quelconque des revendications 1 ou 2 caractérisé en ce que la partie collectrice (110) comporte au moins trois compartiments (139, 140, 141) séparés par les parois radiales verticales (122, 123, 124).

4. Filtre suivant l'une quelconque des revendications 2 ou 3 caractérisé en ce que les parois de séparation sont réglables angulairement.

5. Filtre suivant l'une quelconque des revendications précédentes caractérisé en ce que la chambre séparatrice (115) comporte des parois ou des garnitures faisant "chicane".

6. Filtre suivant les revendications 2 et 3 caractérisé en ce que la paroi (123) séparant le compartiment contenant le deuxième lavage (141) de celui qui contient le liquide de premier lavage (140) ainsi que la paroi (122) séparant le compartiment contenant le premier lavage (140) de celui qui contient les eaux-mères (139), présentent chacune une ouverture de passage (123 L, 122 L) d'un compartiment à l'autre, disposé à un niveau qui permet le passage du filtrat dans un sens imposé, d'un compartiment à l'autre.

7. Filtre suivant l'une quelconque des revendications précédentes caractérisé en ce que chaque compartiment (139, 140, 141) comporte en son fond des ouvertures d'évacuation (130, 131, 132) vers l'alimentation (136, 137, 138) de pompes à filtrat (133, 134, 135).

8. Filtre suivant l'une quelconque des revendications précédentes caractérisé en ce que la partie collectrice (110) du distributeur comporte un secteur d'opérations annexes (129) isolé de la cuve par une paroi horizontale (128) et comportant autant de chambres qu'il y a d'opérations annexes.

0158620

9. Filtre suivant l'une quelconque des revendications précédentes caractérisé en ce que la partie collectrice comporte une section de première filtration, dont l'ouverture (181) est réglée au moyen d'un clapet basculable (180), le liquide recueilli rejoignant le compartiment de premier lavage (140).

FIG.1

# FIG. 2

# FIG. 3

0158620

FIG.4.

0158620

FIG. 5.

119

125   126   127   127A

125A   126A

128

125B   126B   127B

FIG. 6.

123   122
119   124   127   181   —180→   183
182

FIG. 7.

181   183
117   180
122   119
G   L
182

FIG. 8.

Office européen
des brevets

**RAPPORT DE RECHERCHE EUROPEENNE**

EP  85 87 0032

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 334 401 (SOCIETE DE PRAYON) * Page 7, ligne 3 - page 17, ligne 17; figures 1-17 * & US - A - 4 330 404 | 1-4 | B 01 D  33/24 B 01 D  35/08 B 01 D  33/40 |
| A | US-A-3 361 262 (DUNDAS S. ORR) | | |

---

DOMAINES TECHNIQUES RECHERCHES (Int. Cl.4)

B 01 D

Le present rapport de recherche a été établi pour toutes les revendications

| Lieu de la recherche | Date d'achèvement de la recherche | Examinateur |
|---|---|---|
| LA HAYE | 06-05-1985 | PYFFEROEN K. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82